# EUROPÄISCHE PATENTSCHRIFT

(11) **EP 1 874 667 B1**
(45) Veröffentlichungstag und Bekanntmachung des Hinweises auf die Patenterteilung: **27.02.2013**
(21) Anmeldenummer: 06723888.1
(22) Anmeldetag: 31.03.2006
(51) Int. Cl.: B65G 47/88

(54) **ZUFÜHREINRICHTUNG UND ZUFÜHRVERFAHREN FÜR MECHANISCHE BAUTEILE**
FEEDING DEVICE AND METHOD FOR FEEDING MECHANICAL COMPONENTS
DISPOSITIF ET UN PROCÉDÉ POUR AMENER DES ÉLÉMENTS MÉCANIQUES

(30) Priorität: 14.04.2005 DE 202005006042 U; 24.12.2005 DE 202005020205 U
(43) Veröffentlichungstag der Anmeldung: 09.01.2008
(73) Patentinhaber: KUKA Systems GmbH, 86165 Augsburg (DE)
(72) Erfinder: STURM, Thomas, 85259 Wiedenzhausen (DE); LIEPERT, Konrad, 86415 Mering (DE); PFEIFER, Jürgen, 86405 Meitingen-Erlingen (DE)
(74) Vertreter: Ernicke, Klaus Stefan
(86) Internationale Anmeldenummer: PCT/EP2006/002925
(87) Internationale Veröffentlichungsnummer: WO 2006/108516

(56) Entgegenhaltungen:
- JP-A- 6 263 070
- US-A- 4 589 811
- US-A- 5 577 597
- US-B1- 6 827 199
- US-B1- 6 827 199
- PATENT ABSTRACTS OF JAPAN Bd. 2002, Nr. 04, 4. August 2002 (2002-08-04) -& JP 2001 341088 A (HONDA MOTOR CO LTD), 11. Dezember 2001 (2001-12-11)

## Beschreibung

Die Erfindung betrifft eine Zuführeinrichtung und ein Zuführverfahren für mechanische Bauteile, insbesondere Karosseriebauteile oder andere Fahrzeugteile, mit den Merkmalen im Oberbegriff des Verfahrens- und Vorrichtungshauptanspruchs. Die Erfindung betrifft auch eine Bearbeitungsstation mit einer solchen Zuführeinrichtung.

In der Praxis ist es bekannt, Karosseriebauteile von Fahrzeugen gestapelt in einem Rack der Bearbeitungsstelle zuzuführen, wobei eine Bearbeitungsvorrichtung, z.B. ein mehrachsiger Industrieroboter, die Bauteile vom Stapel zur Bearbeitung einzeln greifen muss. Die Vereinzelung der Bauteile erfolgt durch den Roboter. Ferner ist es aus der Praxis bekannt, Karosseriebauteile über Drehtische zuzuführen. Hierbei werden die Bauteile von einem Werker aus einem Stapel oder Behälter entnommen, dabei vereinzelt und auf den Drehtisch gelegt. Diese Methode hat den Nachteil, dass die Arbeitszeit des Werkers unzureichend genutzt wird, weil die Taktzeit für die Bearbeitung häufig deutlich länger als die vom Werker benötigte Zuführzeit ist.

Eine Zuführeinrichtung mit den Merkmalen im Oberbegriff von Anspruch 1 ist aus der US 6,827,199 B1 bekannt. Sie dient zum Transport und zur Zuführung kleinerer ringförmiger Gegenstände, die auf einer Tragstange aufgesteckt sind, welche durch eine Öffnung in einer Stützwand ragt und von unterhalb der Tragstange angeordneten Stützeinrichtungen mit abwechselnd geöffneten und geschlossenen Greifern gehalten wird.

Die US 4,589,811 zeigt eine Zuführeinrichtung für Verpackungsmaterialrollen mit einem Träger und zwei beabstandeten Greifeinrichtungen.

Aus der JP 06-263 070 A ist ein Förderer für gebogene Auspuffrohre bekannt, die an einer horizontalen Führungsstange angehängt und an dieser mittels eines Förderbandes entlang geschoben werden. Die Zuführeinrichtung befindet sich in einem Magazin im Anschluss an eine Bearbeitüngsstation, wo ein Greifroboter angeordnet ist, der mit mehreren einzeln zustellbaren Greifern das vorderste Auspuffrohr greift, von der Führungsstange entnimmt und in eine Fügeposition bewegt.

Es ist Aufgabe der vorliegenden Erfindung, eine bessere Zuführtechnik aufzuzeigen.

Die Erfindung löst diese Aufgabe mit einer Zuführeinrichtung gemäß Anspruch 1, mit einer Bearbeitungsstation gemäß Anspruch 23 und mit einem Verfahren zum Zuführen mechanischen Bauteile gemäß Anspruch 27.

Die Zuführeinrichtung kann verschiedene Sicherheitseinrichtungen haben, die einen sicheren, störungs- und unfallfreien Betrieb gewährleisten. Mit einer formschlüssigen Armverriegelung wird auf mechanische und damit besonders betriebssichere Weise verhindert, däss beide Greifvorrichtungen gleichzeitig öffnen und den Träger loslassen. Auch im Fall einer Antriebsstörung der Greifvorrichtung besteht eine mechanische Sicherung über den beanspruchten Schieber mit den abwechselnd eingreifenden Kulissen. Mit einer Schiebersicherung kann gewährleistet werden, dass die formschlüssige Armverriegelung erst bei vollständigem Schließen beider Greifvorrichtungen betätigt werden kann. Die Greifvorrichtungen können sich nur im vorgesehenen Funktions- und Bewegungsablauf bewegen, wodurch auch der fliegend gehaltene Träger mit dem Bauteilstapel gesichert wird.

Die beanspruchte Zuführeinrichtung hat den Vorteil, dass Bauteile im Stapel auf einem Träger zugeführt und vereinzelt abgegeben werden können, wobei die Beschickung des Trägers und die Abgabe der Bauteile an unterschiedlichen Trägerenden erfolgen können. Die Stützeinrichtung mit deren einzeln steuerbaren Greifeinrichtungen hat dabei den Vorteil, dass ein Bauteiltransport entlang des Trägers von der Beschickungszur Abgabeseite möglich ist.

Die Bauteile können mittels ein oder mehrerer Durchgangsöffnungen auf dem Träger aufgefädelt und hintereinander.unter Bildung eines Stapels aufgehängt werden. Die Durchgangsöffnungen sind vorzugsweise umfangseitig geschlossen, können alternativ aber auch nach unten und/oder nach ein oder mehreren Seiten offen sein. Hierbei kann die Stapelbildung bzw. die Beschickung des Trägers unabhängig von der Vereinzelung und Abgabe der einzelnen Bauteile stattfinden. Dies ermöglicht eine optimale Auslastung von Werkern. Deren Arbeitszeit für die Beschickung und die Stapelbildung kann von der Taktzeit der Werkstückabgabe und Weiterverarbeitung der Werkstücke entkoppelt werden. Ferner ist es möglich, durch die besondere Art der Greifeinrichtungen und der offenen Trägerenden die Beschickung von der Außenseite einer Bearbeitungsstation und von außerhalb eines Schutzzaunes durchzuführen, wobei die maschinelle Vereinzelung und Weiterverarbeitung der Bauteile innerhalb der Bearbeitungsstation und des Schutzzaunes stattfindet.

Die beabstandeten Greifeinrichtungen halten den Träger fliegend oder an beabstandeten Stellen, so dass die Trägerenden in der gewünschten Weise für die Beschickung und Abgabe der Bauteile frei sind. Durch abwechselndes Öffnen und Schließen der Greifeinrichtungen in Verbindung mit einer entsprechenden Vereinzelungsvorrichtung können die vereinzelten Bauteile die Greifeinrichtungen in der Art einer Schleusenfunktion passieren, wobei die mechanische Stabilität und Positionierung des Trägers erhalten bleibt. Der Bauteiltransport kann dabei auf beliebige Art und Weise, z.B. durch Schwerkraft, alternativ aber auch durch eine integrierte Fördervorrichtung oder dergl. geschehen. Der Träger kann hierbei eine beliebige Ausrichtung haben, wobei er in der bevorzugten Ausführungsform mit oben liegender Beschickungsseite schräg gehalten wird. Alternativ kann der Träger auch horizontal oder senkrecht ausgerichtet sein. Die schräge Anordnung hat den Vorteil, dass sich für den Werker eine ergonomisch günstige und gleichbleibende Beschickungslage ergibt.

Die Vereinzelungsvorrichtung kann in der einfachsten Ausführung die Bauteile aus dem Stapel einzeln oder gruppenweise freigeben und den Stapelrest zurückhalten, so dass jeweils nur ein Bauteil oder eine Bauteilgruppe die Greifeinrichtungen passiert. Die Vereinzelungsvorrichtung kann außerdem für ein aktives Trennen zusammenhängender oder vernesteter Bauteile sorgen.

Die Stapelbildung der Bauteile kann an der Zuführeinrichtung und an deren Träger geschehen. Durch die Beschickung und Abgabe der Bauteile an unterschiedlichen Trägerende ist aber eine maximale Sicherheit, insbesondere Unfallsicherheit, gegeben. Dies sorgt auch für die vorerwähnte Entkopplung der Arbeits- bzw. Taktzeiten für Beschickung und Abgabe der Bauteile. Ferner ist es möglich, die Stapelbildung am Träger außerhalb der Zuführeinrichtung, z.B. an einer Tiefziehpresse oder einer anderen Herstellvorrichtung für die Bauteile durchzuführen. In diesem Fall wird dann ein bereits mit Bauteilen beladener Träger an die Zuführeinrichtung gebracht und dort an die Greifeinrichtungen zum Halten und für den weiteren Zuführprozess übergeben. Dies hat den Vorteil, dass der manuelle Stapelprozess an der Zuführeinrichtung eingespart oder verringert werden kann.

Die Zuführeinrichtung bietet verschiedene weitere Vorteile. Sie benötigt wenig Platz und lässt sich auch an ungünstigen Stellen einer Bearbeitungsstation platzieren. Sie lässt sich außerdem an unterschiedliche Umgebungserfordernisse und auch an unterschiedliche Bauteile anpassen. Der Bau- und Konstruktionsaufwand sowie die Herstellkosten sind gering, wobei auch der Aufwand für Sicherheitsmaßnahmen niedrig gehalten werden kann. Für die Bauteile selbst ergeben sich die Vorteile, dass ein gegenseitiges Verhaken oder Verkeilen verhindert oder zumindest vermindert wird. Zudem kann auf einfache Weise eine Absicherung gegen falsches Einlegen geschaffen werden. Die Bauteilorientierung auf der Beschickungsseite kann eine andere als auf der Abgabeseite sein. Über einen entsprechenden Auslauf kann außerdem das Bauteil bei der Abgabe in die gewünschte Lage gebracht und ggf. auch auf einer Bauteilablage positionsgerecht bereit gestellt werden. Der Träger lässt sich durch entsprechende konstruktive Auslegung anpassen.

Eine Bauteilsicherung verhindert, dass an der Zuführeinrichtung falsche Bauteile aufgenommen und in den Bearbeitungsprozess zugeführt werden. Eine Schutzhülle an der Zaunöffnung verhindert, dass Bedienungspersonen in unfallträchtiger Weise von außen in den Arbeitsbereich der Zuführvorrichtung und ihrer mechanischen Bewegungsteile, insbesondere Greifvorrichtungen, fassen. Als zusätzliche Sicherung für den Träger können an ein oder beiden Enden drehbare Tragsterne vorhanden sein, die in jeder Drehstellung eine Abstützung für den Träger bieten und außerdem für eine gesteuerte Bauteilzuführung verwendet werden können.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Zuführeinrichtung in Seitenansicht,
- Figur 2:: eine geklappte Stirnansicht der Zuführvorrichtung gem. Pfeil II von Figur 1,
- Figur 3:: eine Variante der Zuführeinrichtung mit einem Auslauf und eine Bauteilablage,
- Figur 4:: eine weitere Variante der Zuführeinrichtung für andere Bauteilformen und mit einer anderen Bauteilführung,
- Figur 5:: eine mehrständige Zuführeinrichtung in Stirnansicht,
- Figur 6 bis 13:: die Zuführeinrichtung von Figur 1 und 2 in 4 Funktionsschritten mit jeweiliger Seiten- und Stirnansicht,
- Figur 14 und 15:: eine Variante der Zuführeinrichtung von Figur 1 und 2 in zwei Funktionsschritten in Seitenansicht,
- Figur 16 bis: 18: mehrere nicht unter Anspruch 1 und 27 fallende Varianten der Greifeinrichtung,
- Figur 19 und 20:: weitere Varianten der Zuführeinrichtung mit anderen Greifeinrichtungen und mit Sicherheitseinrichtungen in perspektivischer und frontaler Ansicht,
- Figur 21:: eine perspektivische Darstellung einer formschlüssigen Armverriegelung,
- Figur 22:: eine perspektivische Detaildarstellung einer Schiebersicherung,
- Figur 23:: eine perspektivische Darstellung einer ander Greiferschale und
- Figur 24 bis 26:: eine Tragstern-Stützeinrichtung in verschiedenen Ausführungen und Ansichten.

Die Erfindung betrifft eine Zuführeinrichtung (7) und ein Zuführverfahren für mechanische Bauteile (4,5), insbesondere Karosseriebauteile oder andere Fahrzeugteile und eine Bearbeitungsstation (1) die mit ein oder mehreren solcher Zuführeinrichtungen (7) ausgestattet ist und die außenseitig von einem Schutzzaun (2) umgeben ist.

Die Bauteile (4,5) können von beliebiger Art, Form und Größe sein. Sie können untereinander gleich oder unterschiedlich sein. Insbesondere können auch Bauteilgruppen gebildet werden.

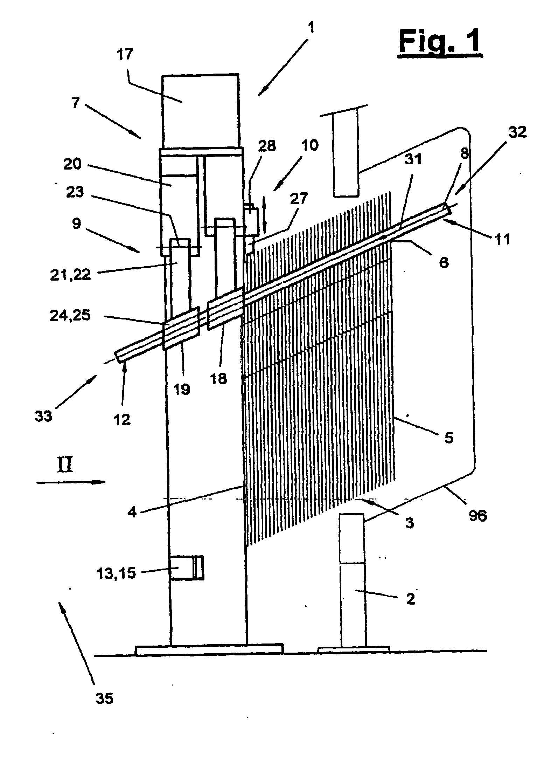

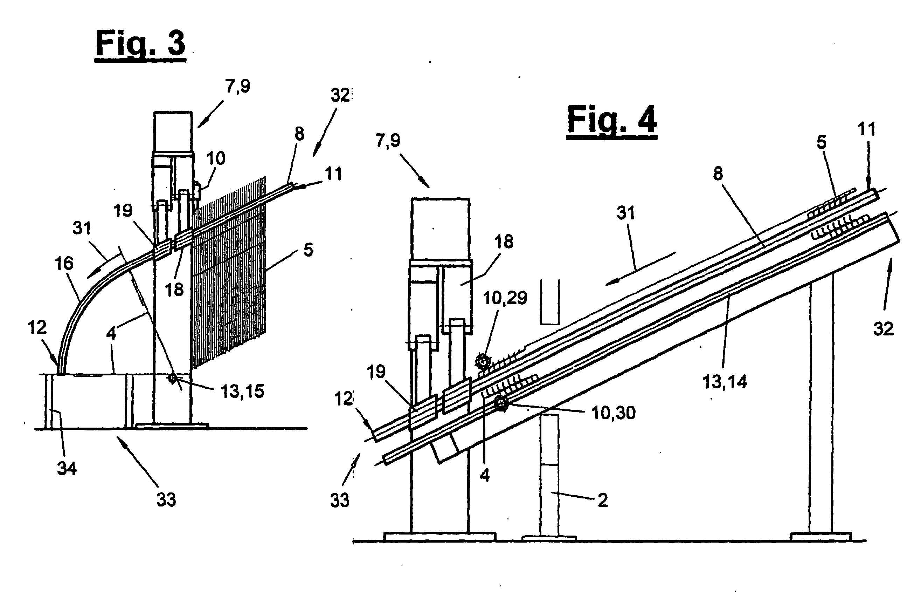

In Figur 1 bis 3 sind Bauteile (4,5) mit einer im wesentlichen ebenen Formgebung dargestellt. Figur 4 zeigt eine Variante mit topfartigen Bauteilen (4,5). Die Bauteile (4,5) haben jeweils mindestens eine Durchgangsöffnung (6), die ein Auffädeln auf einen stangenförmigen Träger (8) ermöglicht. Mittels dieser Durchgangsöffnungen (6) hängen die Bauteile (4,5) am Träger (8). Die Durchgangsöffnungen (6) sind vorzugsweise umfangseitig geschlossen, können alternativ aber auch nach unten und/oder nach ein oder mehreren Seiten offen sein. Der Träger (8) kann aus ein oder mehreren stangenförmigen Teilen bestehen. Bei einem mehrteiligen Träger (8) können die Trägerteile durch mehrere Durchgangsöffnungen (6) gesteckt werden, was eine andere Art der Bauteilführung ermöglicht.

Wenn die Bauteile (4,5) am Träger (8) eine labile Lage einnehmen, kann zur Lagestabilisierung eine Bauteilführung (13) vorhanden sein. Diese besteht z.B. in der Variante von Figur 4 aus einem Gegenhalter (14), der mit paralleler Ausrichtung neben dem Träger (8) angeordnet ist. An diesem stangenförmigen Gegenhalter (14) können sich die Bauteile (4,5) abstützen und dadurch eine definierte Lage und Orientierung am Träger (8) einnehmen. Alternativ oder zusätzlich können auch seitliche Gegenhalter oder andere Arten von Bauteilführungen (13) vorhanden sein.

Der Träger (8) hat in den gezeigten Ausführungsformen zumindest bereichsweise eine gerade Ausrichtung und eine Stangenform. Der Träger (8) kann in der vorerwähnten Weise aus ein oder mehreren solcher Stangen bestehen. Die Querschnittsform des Trägers (8) kann an die Form der Durchgangsöffnungen (6) angepasst sein und im Querschnitt prismatisch, rund oder in sonstiger beliebiger Weise ausgebildet sein. Der Träger (8) kann wesentlich kleiner als die Durchgangsöffnung (6) sein oder eine entsprechende Größe besitzen und die Durchgangsöffnung (6) im wesentlichen ausfüllen.

Der Träger (8) hat zwei gegenüber liegende Enden (11,12), von denen das eine Ende (11) zur Beschickungsseite (32) der Zuführeinrichtung (7) weist. Das andere Trägerende (12) weist zur Abgabeseite (33). Wie Figur 3 verdeutlicht kann der Träger (8) einen gebogenen oder abgewinkelten Auslauf (16) aufweisen, der z.B. an der Abgabeseite (33) angeordnet ist und der eine Umorientierung der Bauteile (4,5) bei der Abgabe ermöglicht.

Der Träger (8) ist in den gezeigten Ausführungsformen schräg ausgerichtet, wobei das beschickungsseitige Trägerende (11) höher liegt als das abgabeseitige Trägerende (12). Durch diese Ausrichtung können die Bauteile (4,5) am Träger (8) in Förderrichtung (31) durch ihr Eigengewicht schräg nach unten rutschen. Dieses Rutschen kann ggf. durch eine Rüttelfunktion am Träger (8) unterstützt werden.

Alternativ kann im Träger (8) oder extern eine Fördervorrichtung angeordnet sein, die für einen aktiven Bauteiltransport sorgt.

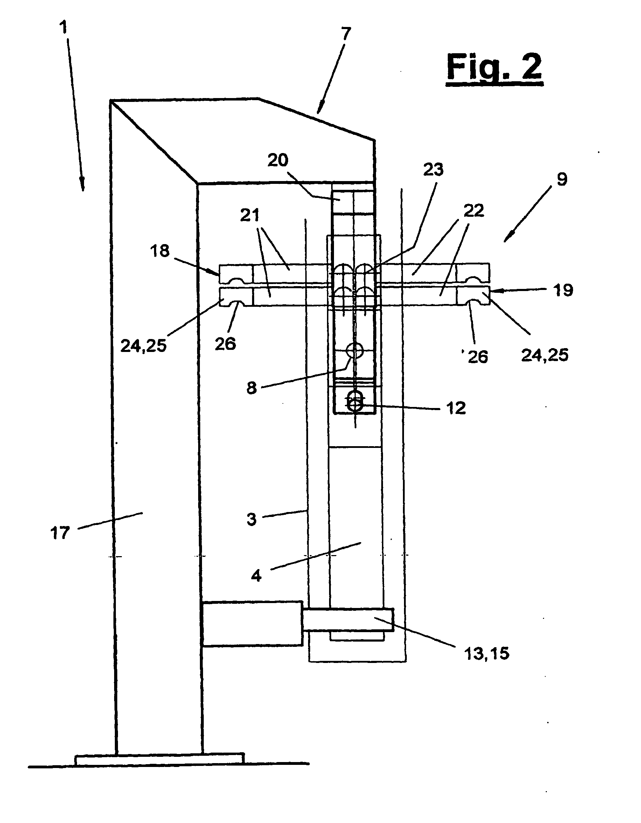

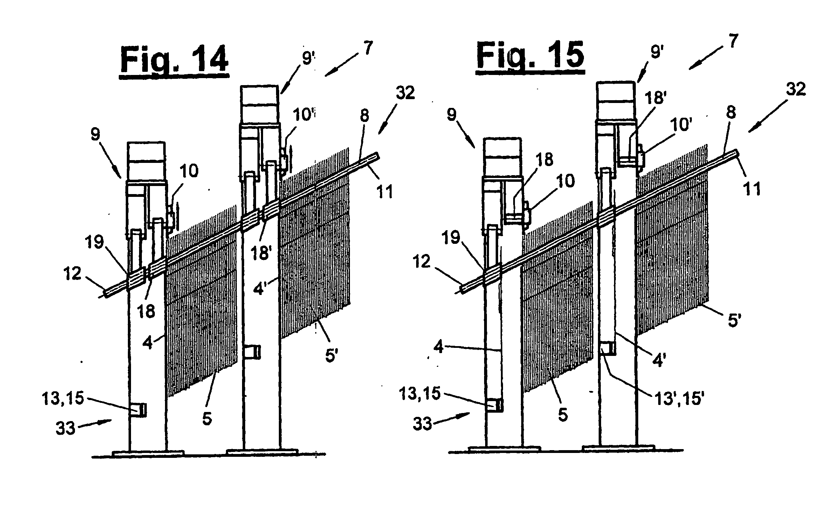

Die in Figur 1 und 2 im Detail dargestellte Zuführeinrichtung (7) weist eine Stützeinrichtung (9) für den Träger (8) mit mehreren gegenseitig beabstandeten und einzeln beweglichen sowie steuerbaren Greifeinrichtungen (18,19) sowie eine Vereinzelungsvorrichtung (10) für die am Träger (8) befindlichen Bauteile (4,5) auf. In der Variante von Figur 14 und 15 sind zwei Stützeinrichtungen (9,9') für den Träger (8) mit jeweils mehreren Greifeinrichtungen (18,18',19,19') vorhanden. Die Greifeinrichtungen (18,18',19,19') sind vorzugsweise gleichartig ausgebildet.

Die einzeln oder gemeinsam steuerbaren Greifeinrichtungen (18,18',19,19') halten den Träger (8) mit Formschluss und/oder mit Kraftschluss und können in beliebiger Weise ausgestaltet sein. Figur 1 und 2, Figur 16 bis 18 sowie 23, 24 zeigen hierfür verschiedene konstruktive Varianten.

Die Greifeinrichtungen (18,18',19,19') können einzeln und zeitversetzt geöffnet und geschlossen werden, wodurch die vereinzelten Bauteile (4) die Greifeinrichtungen (18,18',19,19') passieren und zum abgabeseitigen Trägerende (12) gelangen können. Der Abstand zwischen den Greifeinrichtungen (18,18',19,19') in Längsrichtung (31) des Trägers (8) ist dabei so groß, dass mindestens ein Bauteil (4) zwischen den Greifeinrichtungen (18,18',19,19') kollisionsfrei Platz findet. Die Zahl der aufnehmbaren Bauteile (4) und der Abstand hängen von der gewünschten Vereinzelungsfunktion ab und können variieren. Eine Vereinzelung kann auch eine Gruppe von mehreren gleichartigen oder unterschiedlichen Bauteilen (4) erfassen.

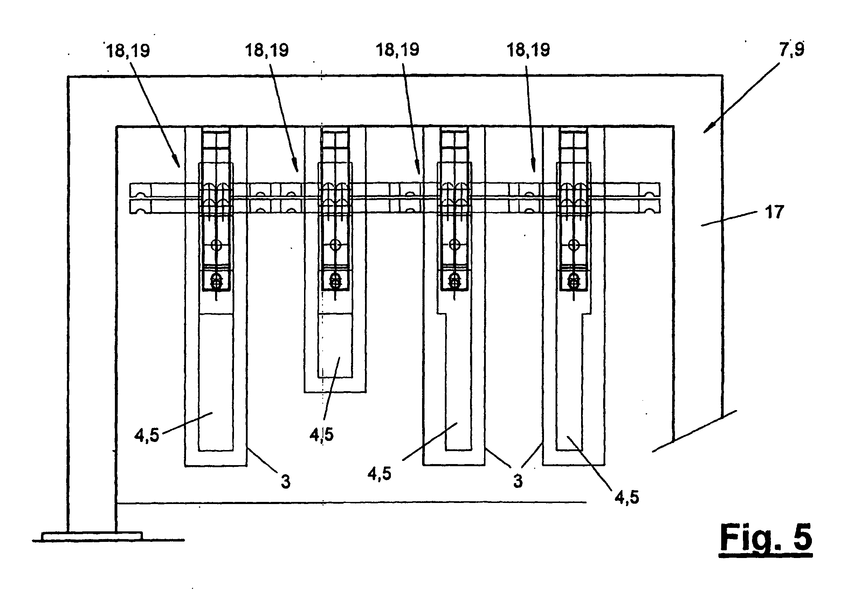

Die Stützeinrichtung (9,9') besitzt ein Grundgestell (17), welches z.B. gemäß Figur 1 bis 4 L-förmig gestaltet ist. Am Grundgestell (17) sind die vorerwähnten Greifeinrichtungen (18,18',19,19') vorzugsweise hängend angeordnet. Figur 5 zeigt hierzu eine Alternative mit einem portalartigen Grundgestell (17), an dem seitlich nebeneinander mehrere Träger (8) und mehrere Gruppen von Greifeinrichtungen (18,19) angeordnet sind. Diese Gestaltung gestattet eine parallele Zuführung von mehreren Bauteilen (4,5), die untereinander auch unterschiedlich ausgebildet sein können, wie dies Figur 5 zeichnerisch andeutet.

In der einen Ausführungsform von Figur 1 bis 13 besitzt die Stützeinrichtung (9) innerhalb jeder Gruppe zwei Greifeinrichtungen (18,19), die den Träger (8) fliegend halten. Sie greifen hierbei am abgabeseitigen Trägerende (12) an. Alternativ können gemäß der Variante von Figur 14 bis 16 mehr als zwei Greifeinrichtungen (18,19) vorhanden sein, die ggf. auch weiter voneinander in Trägerrichtung beabstandet sind. Insbesondere kann bei sehr langen Trägern (8) oder bei sehr schweren Bauteilen (4,5) mindestens eine weitere Greifeinrichtung (18',19') oder auch eine weitere Gruppe der gezeigten Greifeinrichtungen (18',19') an einer trägeraufwärtsliegenden Stelle am Träger (8) angreifen.

Die zu einer Gruppe gehörigen Greifeinrichtungen (18,18',19,19') sind bei einer schrägen Trägerausrichtung in unterschiedlicher Höhe am Grundgestell (17) angeordnet. Die Greifeinrichtungen (18,18',19,19') sind dabei so ausgerichtet, dass sie den Träger (8) in der gewünschten Schräglage einzeln und gemeinsam halten können.

In den gezeigten beispielhaften Ausführungsformen besitzt jede Greifeinrichtung (18,18',19,19') jeweils ein oder mehrere bewegliche Greifelemente (24,24'), die den Träger (8) in Schließstellung festhalten, insbesondere einspannen, und ihn in Lösestellung soweit freigeben, dass das Bauteil (4) die freigegebene Greifstelle am Träger (8) passieren kann.

Erfindungsgemäß sind die Greifeinrichtungen (18,18',19,19') zangenartig ausgebildet und besitzen jeweils zwei bewegliche Haltearme (21,22), die am unteren Ende die Greifelemente (24,24') tragen, welche als paarweise Greifschalen (25) ausgebildet sind. Die Haltearme (21,22) sind quer zur Trägerlängsachse nebeneinander angeordnet und dabei parallel ausgerichtet. In Schließstellung liegen die beiden Greifschalen (25) einander gegenüber und spannen zwischen sich den Träger (8) ein. Am oberen Ende haben die vorzugsweise vertikal ausgerichteten Haltearme (21,22) jeweils ein Schwenklager (23) mit einem nicht dargestellten Schwenkantrieb. Zum Öffnen können die Haltearme (21,22) um 90° nach oben in die in Figur 2 gestrichelt dargestellte Horizontalstellung geschwenkt werden, in der eine Bauteilpassage möglich ist. Die Haltearme (21,22) sind jeweils an einem Basisteil (20) angeordnet, welches die besagte Höhenverstellung am Grundgestell (17) ermöglicht. Dies kann eine interne Höhenverstellung mit einem Linearantrieb sein. Alternativ kann das Basisteil (20) als unterschiedlich lange Konsole ausgebildet sein.

Die Greifschalen (25) können entsprechend der Trägerneigung schräg an den Haltearmen (21,22) angeordnet sein und haben innenseitig eine ebenfalls schräge Aufnahme (26) zum formschlüssigen Greifen des Trägers (8). Die Aufnahme (26) kann z.B. eine Rinnenform aufweisen und ist an die beaufschlagte Außenkontur des Trägers (8) formschlüssig angepasst. Alternativ können an den Schalenenden halbringförmige Spannstellen mit einer dazwischen liegenden Ausnehmung angeordnet sein und axial beabstandete, definierte Spannstellen bilden. Die Greifschalen (25) können ferner eine Verriegelungseinrichtung (nicht dargestellt) aufweisen, die sie in Spannstellung am Träger (8) zusätzlich fixiert und zusammenhält.

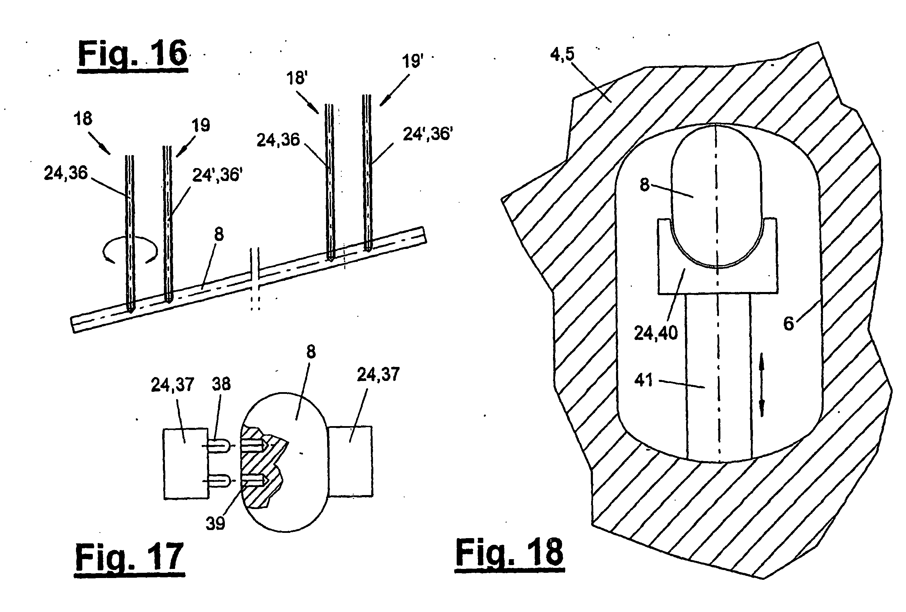

Figur 16 bis 18 und Figur 23, 25 zeigen verschiedene konstruktive Abwandlungsmöglichkeiten für die Greifeinrichtungen (18,18',19,19') und die Greifelemente (24,24'). In der Variante von Figur 16 sind die Greifelemente (24,24') als Schraubspindeln (36,36') ausgebildet, die in entsprechende Schrauböffnungen am Träger (8) zugestellt und mit wenigen Umdrehungen eingedreht werden können. In Einschraubstellung hängt der Träger (8) an den Schraubspindeln (36,36'). Diese Ausführungsvariante eignet sich besonders für Zuführeinrichtungen (7), die mit mehreren Stützeinrichtungen (9,9') und mehreren Gruppen von Greifeinrichtungen (18,18',19,19') ausgerüstet sind, wobei immer zwei in Trägerrichtung beabstandete Schraubspindeln (36,36') gemeinsam den Träger (8) halten und abstützen. In Abwandlung der gezeigten Ausführungsform können die Schraubspindeln (36,36') je nach Größe und Art der Bauteile (4,4') auch von anderer Seite her am Träger (8) angreifen.

Figur 17 zeigt eine formschlüssige Klemm- oder Spannvariante, bei der die Greifelemente (24) als Spannbacken (37) mit ein oder mehreren vorstehenden Zapfen (38) ausgebildet sind, welche in passende Gegenöffnungen (39) am Träger (8) greifen. Die Spannbacken (37) können ähnlich wie die Greifschalen (25) über schwenkbare Haltearme oder auf andere Weise in Eingriffstellung am Träger (8) seitlich oder aus einer anderen Richtung zugestellt und zur Freigabe wieder zurück gezogen werden.

In der Variante von Figur 18, die vor allem für kleinere Bauteile (4,5) geeignet ist, sind die Greifelemente (24) als Stützschalen (40) ausgebildet, die von unten her am Träger (8) formschlüssig stützend angreifen, die mittels einer Zustellung (41), z.B. in Form eines Hubzylinders oder dergleichen, vertikal auf- und abbewegt werden können.

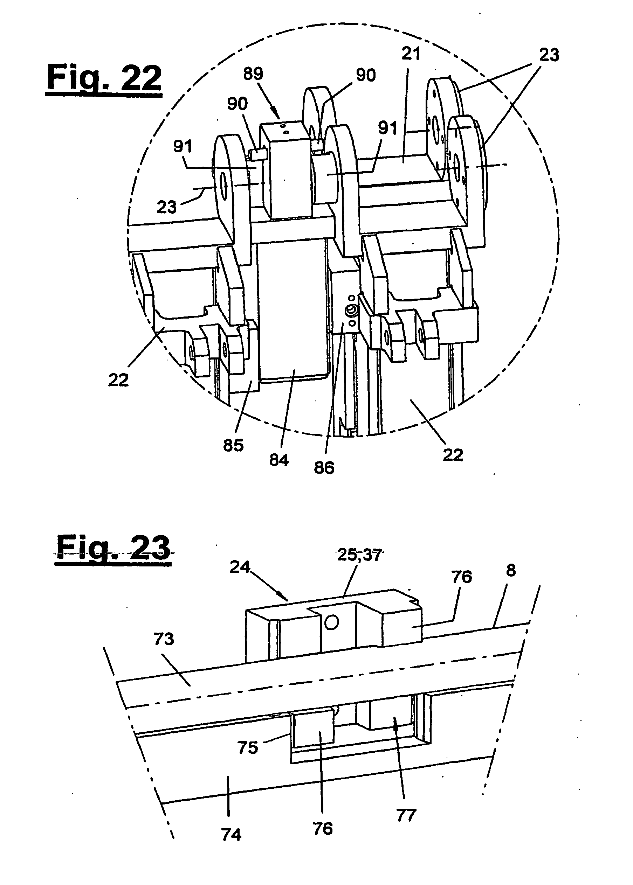

In der Variante von Figur 23 besteht der Träger (8) aus einem vorzugsweise zylindrischen Rundteil (73) und einer darunter angeordneten und schmaleren Stützleiste (74), die im Bereich der Greifelemente (24) mit einer Durchgangsöffnung (75) versehen ist. Die Greifelemente (24) bestehen auch hier aus zwei Schalen (25), die miteinander den Träger (8) beidseits formschlüssig fassen, so dass der Träger (8) dreh- und schubfest gehalten ist. Hierfür weist die in Figur 23 einzeln dargestellte Schale (25) zwei seitlich beabstandete Stützfinger (76) auf, von denen einer unterhalb und der andere oberhalb des Rundteils (73) angeordnet ist. Beide Stützfinger (76) ragen in Querrichtung über die Mittellinie des Rundteils (73) vor und sind in der Lage, dieses auch allein zu halten. Den Stützfingern (76) auf der anderen Seite des Rundteils (73) gegenüberliegend sind Ausnehmungen (77) vorhanden, in die die Stützfinger (76) der komplementär ausgebildeten Gegenschale greifen. Die unteren Stützfinger (76) beider Schalen (25) greifen dabei auch durch den Durchlass (75) und halten in Schließstellung den Träger (8) gegen axiales Abrutschen formschlüssig fest. An den unteren Stützfingern (76) können außenseitige Einweiskurven vorhanden sein, um beim Schließen der Schalen (25) den Durchlass (75) sicher zu treffen und ggf. den Träger (8) auch ein Stück in Position ziehen zu können. Ansonsten haben die beiden Schalen (25) auch noch halbrunde seitliche Aufnahmen in Formanpassung an das Rundteil (73).

Die Vereinzelungsvorrichtung (10) kann in unterschiedlicher Weise ausgebildet sein. Im Ausführungsbeispiel von Figur 1 bis 3 besteht sie aus ein oder mehreren beweglichen Trennfingern (27) mit einer entsprechenden Stelleinrichtung (28). Die Trennfinger (27) dienen für die gesteuerte Freigabe des in Förderrichtung (31) vordersten Bauteils (4) und für den Rückhalt der anderen im Stapel dahinter liegenden Bauteile (5). Je nach Art und Größe der Bauteile (4,5) können ein oder mehrere solche Trennfinger (27) vorhanden sein. Im Ausführungsbeispiel von Figur 1 bis 3 ist ein einzelner Trennfinger (27) an der Oberseite der Bauteile (4,5) angeordnet, der von der Stelleinrichtung (28) vertikal auf und ab bewegt wird, wobei er in einen Freiraum zwischen die im Stapel hängenden Bauteile (4,5) greift.

Figur 4 zeigt eine Variante der Vereinzelungsvorrichtung (10), die besonders für formschlüssig ineinander greifende und vernestete Bauteile (4,5) geeignet ist. Diese Vereinzelungsvorrichtung (10) sorgt für ein aktives Trennen und gegenseitiges Lösen der vernesteten Bauteile (4,5), wobei dem vereinzelten vorderen Bauteil (4) auch ein Förderimpuls gegeben wird. In der gezeigten Ausführungsform besteht die Vereinzelungsvorrichtung (10) aus zwei einander gegenüberliegenden drehbaren Zahnrädern (29,30), die als Stirnräder ausgebildet sind und gesteuert angetrieben werden. Mit ihren Zähnen greifen sie formschlüssig zwischen die benachbarten Ränder der Bauteile (4,5) und trennen diese bei ihrer Drehbewegung.

In beiden beschriebenen Ausführungsformen ist die Vereinzelungsvorrichtung (10) in Förderrichtung (31) vor den abgabeseitigen Greifeinrichtungen (18,19) angeordnet und sorgt für eine Vereinzelung des jeweils vordersten Bauteils (4) im Stapel vor den Greifeinrichtungen (18,19). Alternativ kann eine Gruppe von mehreren Bauteilen (4) vereinzelt werden.

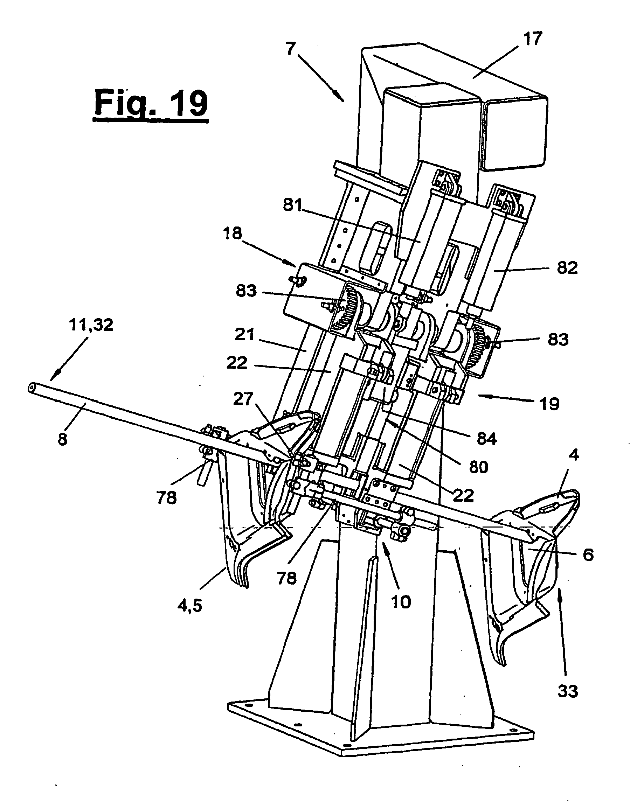

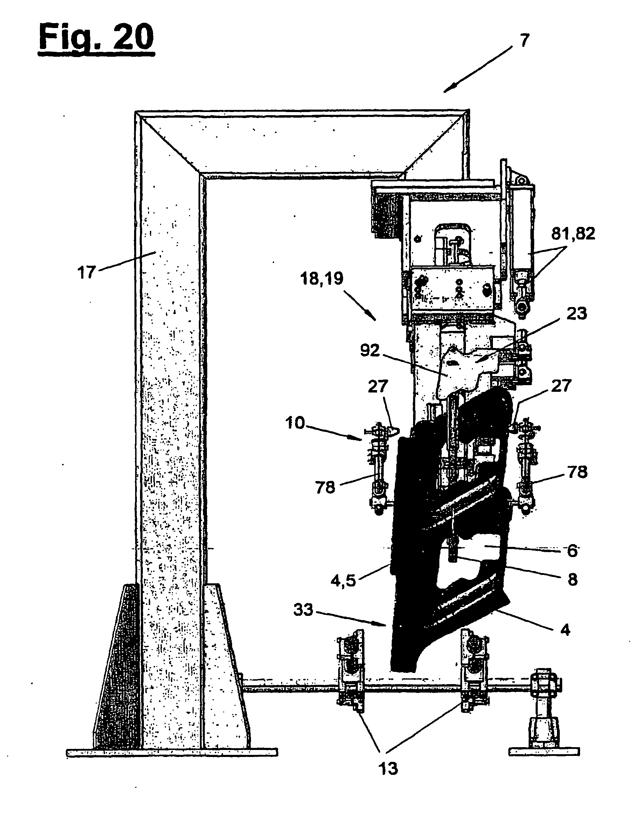

Im Ausführungsbeispiel der Figuren 19 und 20 ist die Vereinzelungsvorrichtung (10) beweglich angeordnet und z.B. mit der unteren Greifeinrichtung (19) verbunden. Ein oder mehrere Trennfinger (27) befinden sich dabei an ein oder mehreren mit ein oder beiden Haltearmen (21,22) verbundenen, gestellartigen Auslegern (78), die entlang des Trägers (8) über die obere Greifeinrichtung (18) hinaus reichen. Außerdem ist an der vorderen Greifeinrichtung (18) noch ein Anschlag (nicht dargestellt) für das vorderste Bauteil (4) im Bauteilstapel (5) vorhanden. Wenn die untere Greifeinrichtung (19) geöffnet wird, wird bei dieser Anordnung automatisch auch die Vereinzelungsvorrichtung (10) geöffnet. Die mit den Haltearmen (21,22) ausgeschwenkten Trennfinger (27) geben den Bauteilstapel (5) frei, der nach unten rutschen kann, wobei das vorderste Bauteil (4) in Anlage am Anschlag der oberen Greifeinrichtung (18) kommt. Der axiale Abstand des Anschlags und der Trennfinger (27) in Trägrerlängsrichtung ist bauteilspezifisch bemessen, so dass die beim Schließen der Vereinzelungsvorrichtung (10) wieder eingeschwenkten Trennfinger (27) hinter das vorderste Bauteil (4) im Stapel (5) greifen und den Folgestapel gegen Abrutschen stützen und festhalten. Wenn anschließend die obere Greifeinrichtung (18) öffnet, wird auch der Anschlag freigegeben und das Bauteil (4) kann am Träger (8) zur Abgabeseite (33) rutschen. Nach dem Schließen der oberen Greifeinrichtung (18) beginnt der Zyklus von vorn.

In einer weiteren, nicht dargestellten Variante kann die Vereinzelungsvorrichtung (10) eine mit Magnetkraft wirkende Spreizeinrichtung zum Distanzieren der Bauteile (4) im Bauteilstapel (5) aufweisen. Dies können z.B. eine elektromagnetische Spreizeinrichtung, oder schaltbare Dauermagnete oder dgl. sein. Durch eine gleichpolige Magnetisierung stoßen sich benachbarte Bauteile (4) ab und bilden einen ausreichend großen und definierten Freiraum oder Spalt, in den der Trennfinger (27) oder ein anderes Teil der Vereinzelungsvorrichtung (10) greifen kann. Bei Bauteilen (4) aus nicht magnetisierbaren Werkstoffen, die aber elektrisch leitend sind, können magnetische Abstoßreaktionen durch Wirbelströme erzeugt werden.

Die Zuführeinrichtung (7) kann auch im Bereich der Greifeinrichtungen (18,19) eine Bauteilführung (13) aufweisen, die z.B. in Figur 1 und 2 ein unterhalb der Greifeinrichtungen (19,18) am Grundgestell (17) angeordneter Anschlag (15) sein kann, welcher auf den unteren Bauteilrand einwirkt. Dieser Anschlag (15) kann mit einem Stellantrieb versehen sein und sich bei Bedarf in die Bewegungsbahn der Bauteile (4,5) ein- und ausfahren lassen. In ausgefahrener Stellung verhindert der Anschlag (15) ein Durchschwingen und Verkeilen des vereinzelten Bauteils (4) bei der Transportbewegung entlang des Trägers (8).

In Figur 20 ist eine andere Variante der Bauteilführung (13) dargestellt, die z.B. aus zwei parallelen Leisten oder auch Bremsbesen besteht, die an der Abgabeseite (33) angeordnet sind und die ein schwingungs- und pendelanfälliges Bauteil (4) bei der Abrutschbewegung seitlich führen.

In der Variante von Figur 3 kann der Anschlag (15) eine Zusatzfunktion haben und sich permanent im Bewegungsbereich der Bauteile (4,5) finden. In diesem Fall dient er als Widerlager für den unteren Bauteilrand, wodurch das Bauteil (4) beim Abrutschen entlang des gebogenen Auslaufs (16) eine Schwenkbewegung um ein oder mehrere Achsen durchführt und eine Endlage einnimmt, die sich von der Zuführlage an der Beschickungsseite (32) unterscheidet. Hierbei kann z.B. das Bauteil (4) schräg oder horizontal auf eine Bauteilablage (34) abgelegt und mittels Einweisern oder dergl. in eine definierte Position gebracht werden. In dieser Position kann das Bauteil (4) bearbeitet werden. Alternativ kann es aus dieser definierten Lage für die Weiterverarbeitung an anderer Stelle von einem mehrachsigen Industrieroboter oder einer anderen Bearbeitungseinrichtung, einem Förderer oder dergl. erfasst und weiter bewegt werden. Der Auslauf (16) kann hierbei ebenfalls beweglich und gesteuert angetrieben sein, um eine Bauteilentnahme zu ermöglichen.

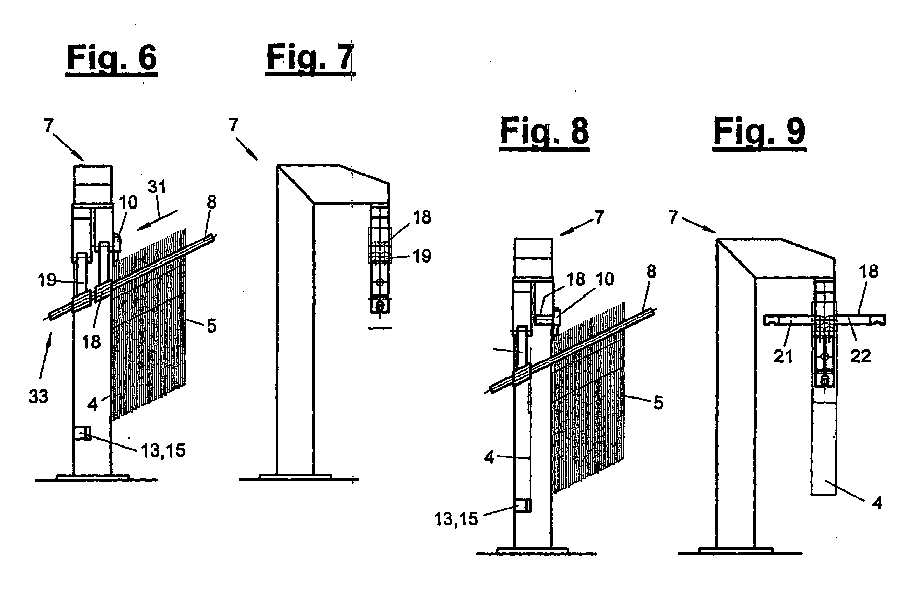

Figur 6 bis 13 verdeutlichen den Funktionsablauf der Zuführeinrichtung (7) in vier Schritten, wobei die Zuführeinrichtung (7) jeweils in Seitenansicht und geklappter Stirnansicht entsprechend der Darstellung von Figur 1 und 2 gezeigt ist.

Figur 6 und 7 verdeutlichen die Ausgangsstellung der Zuführeinrichtung (7) mit einem Stapel von Bauteilen (4,5) am Träger (8), der in Förderrichtung (31) an der Vereinzelungsvorrichtung (10) anliegt. Im zweiten Schritt gem. Figur 8 und 9 hat die Vereinzelungsvorrichtung (10) zunächst das vorderste Bauteil (4) freigegeben und hält den Folgestapel der Bauteile (5) zurück. Anschließend hat die in Förderrichtung (31) vordere und obere Greifeinrichtung (18) geöffnet und die Haltearme (21,22) aufgespreizt. Hierdurch kann das vereinzelte Bauteil (4) am Träger (8) entlang rutschen und an der zweiten, unteren und noch geschlossenen Greifeinrichtung (19) sowie ggf. an der Bauteilführung (13,15) anschlagen. In dieser in Figur 8 und 9 gezeigten Situation hält die geschlossene Greifeinrichtung (19) den Träger (8) mit dem restlichen Bauteilstapel fest.

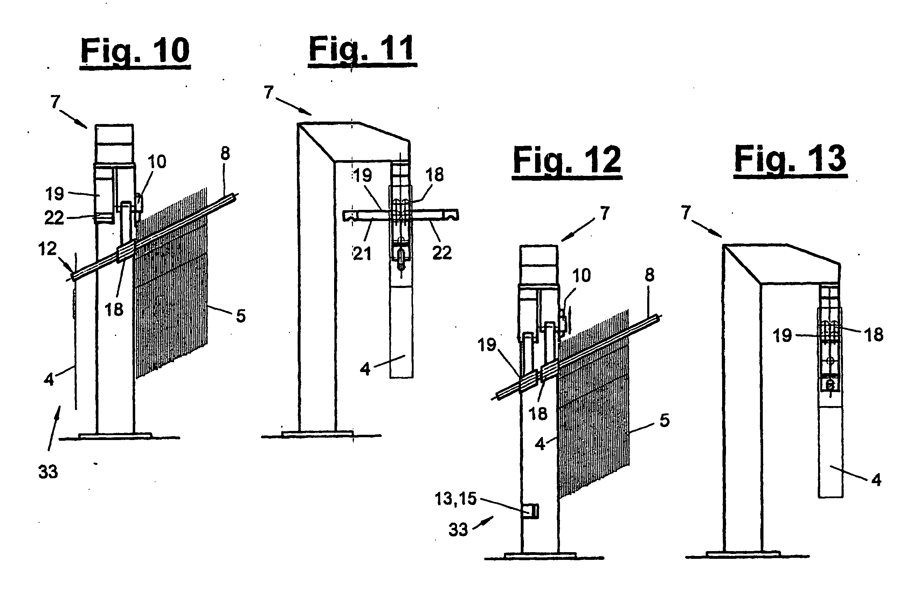

Im dritten Schritt gem. Figur 10 und 11 schließt die obere Greifeinrichtung (18) hinter dem vereinzelten Bauteil (4) und fasst den Träger (8) und hält ihn mit dem restlichen Bauteilstapel (5) fest. Anschließend öffnet die hintere oder untere Greifeinrichtung (19) durch Aufspreizen der Schwenkarme (21,22), so dass das vereinzelte Bauteil (4) ungehindert abrutschen und zum abgabeseitigen Trägerende (12) gelangen kann. Hier wird es in einer geeigneten Weise abgenommen und weiter transportiert oder weiter verarbeitet. Figur 10 und 11 verdeutlichen diesen Zustand.

Im vierten und letzten Funktionsschritt schließt auch die hintere Greifeinrichtung (19) wieder und fasst ebenfalls den Träger (8). Anschließend gibt die Vereinzelungsvorrichtung (10) das nächstfolgende Bauteil (4) frei und hält den restlichen Bauteilstapel (5) zurück, wonach der vorbeschriebene Zyklus erneut beginnt.

Die in Figur 14 und 15 gezeigte Variante der Zuführeinrichtung (7) mit zwei oder mehreren entlang des Trägers (8) mit Abstand angeordneten Stützeinrichtungen (9,9') funktioniert in ähnlicher Weise, wobei der Träger (8) in jeder Phase an mindestens zwei voneinander beabstandeten Stellen mit Greifeinrichtungen (18,18',19,19') gehalten ist. Die Stützeinrichtungen (9,9') und ihre Vereinzelungsvorrichtungen (10,10') sowie ihre Bauteilführungen (13,13',15,15') und ihre Greifeinrichtungen (18,18',19,19') sind untereinander vorzugsweise gleichartig ausgebildet und entsprechen in der gezeigten Ausführungsform der Variante von Figur 1 und 2. An jeder Stützeinrichtung (9,9') wird am Träger (8) ein eigener Bauteilstapel (5,5') gebildet, wobei die Vereinzelung und der Weitertransport der jeweils vorn liegenden Bauteile (4,4') vorzugsweise gleichzeitig erfolgt.

Figur 14 zeigt hierbei die Ausgangsstellung der Stützeinrichtungen (9,9') mit der Freigabe des jeweils vordersten Bauteils (4,4') und dem Rückhalt des Folgestapels (5,5'). In der Folgeposition von Figur 15 haben die jeweils vorderen Greifeinrichtungen (18,18') geöffnet, wodurch das vereinzelte Bauteil (4,4') am Träger (8) entlang gerutscht ist und an der zugehörigen zweiten, noch geschlossenen Greifeinrichtung (19,19') anschlägt. Diese beiden Greifeinrichtungen (19,19') halten dabei den Träger (8) lagesicher fest. Im nicht dargestellten Folgeschritt schließen die Greifeinrichtungen (18,18'), wonach die anderen Greifeinrichtungen (19,19') öffnen und einen Weitertransport der vereinzelten Bauteile (4,4') ermöglichen. Das Bauteil (4') rutscht hierbei an das Ende des Bauteilstapels (5). Anschließend beginnt der Zyklus von vorn.

Innehalb der Bearbeitungsstation (1) ist die Zuführeinrichtung (7) vorzugsweise innerhalb des Schutzzauns (2) angeordnet und ragt mit ihrem Träger (8) lediglich ein Stück durch eine Zaunöffnung (3) nach außen zur Beschickungsseite (32). Die Zaunöffnung (3) bildet einen konturenmäßig an die Bauteile (4,5) zumindest weitgehend angepassten Durchlass für den Bateilstapel. (5). Der Werker (nicht dargestellt) kann somit die Bauteile (5) außerhalb des Schutzzauns (2) auf den Träger (8) stecken. Dies kann von Hand oder mit Hilfe einer Beschickungseinrichtung geschehen, die an das Trägerende (11) andockt. Die Beschickung kann alternativ auch maschinell und vollautomatisch geschehen. Zur Erhöhung der Unfallsicherheit kann rund um die Zaunöffnung (3) gemäß Figur 1 eine Schutzhülle (96) angeordnet sein, die sich in Trägerrichtung nach außen erstreckt und die zumindest an drei Seiten die Zaunöffnung (3) und den herausragenden Träger (8) sowie den Bauteilstapel (5) umgibt. Die Schutzhülle (96) verhindert, dass von außen ein Werker in den Gefahrenbereich der Zuführvorrichtung (7) und insbesondere in den Bereich der Greifeinrichtung (18,19) mit der Hand reichen kann.

Die Abgabeseite (33) der Zuführeinrichtung (7) befindet sich innerhalb des Schutzzaunes (2), wo sich auch der Arbeitsbereich (35) für die Aufnahme und Weiterbearbeitung der vereinzelten Bauteile (4) befindet. Die Zuführeinrichtung (7) und ihre beweglichen angetriebenen Komponenten besitzen eine geeignete Steuerung (nicht dargestellt), die mit der Zellen- oder Stationssteuerung und den Prozesssteuerungen für die Weiterbearbeitung gekoppelt sein kann. Die beweglichen Teile der Stützeinrichtung (9) haben geeignete und mit dieser Steuerung verbundene Antriebe (nicht dargestellt). Ferner kann die Zuführeinrichtung (7) Mess- und Kontrolleinrichtungen, insbesondere Kraft-, Positions- oder Bewegungssensoren besitzen, um die korrekte Funktion der Komponenten der Zuführeinrichtung (7) und die korrekte Beschickung und Lage der Bauteile (4,5) zu überwachen und bei Fehlfunktionen einen Alarm auszugeben. Insbesondere kann das Vorhandensein von Bauteile (4,5) am Träger (8) und ein evtl. Beschickungsbedarf erfasst und gemeldet werden.

In den gezeigten Ausführungsformen ist der Träger (8) stationär an der Zuführeinrichtung (7) angeordnet und hält beim abwechselnden Greifen und Loslassen der Greifeinrichtungen (18,18',19,19') seine Position. Die Stapelbildung der Bauteile (4,4',5,5') erfolgt am Träger (8) durch einzelnes oder gruppenweises Aufstecken von Bauteilen (5,5') an der Beschickungsseite (32). Alternativ kann der Träger (8) austauschbar und transportabel sein, wobei die Stapelbildung an anderer Stelle, z.B. an einer Tiefziehpresse für Blechbauteile, erfolgen kann. In diesem Fall werden die Bauteile (4,5) bei der Abnahme von der Presse gleich auf einen Träger (8) gesteckt und durch Klammern oder andere geeignete Halter fixiert. Der bestückte Träger (8) wird dann mit einem geeigneten Fördermittel zur Zuführeinrichtung (7) transportiert und dort mit seinem abgabeseitigen Trägerende (12) in die geöffneten, leeren Greifeinrichtungen (18,19) gesteckt und übergeben. Anschließend werden die Klammern oder anderen temporären Halter entfernt, so dass der Träger (8) mit dem Bauteilstapel für die vorbeschriebene Zuführ- und Vereinzelungsfunktion bereit steht. In Variation hierzu können die Bauteile (4) am Produktionsort, z.B. einer Tiefziehpresse für Blechbauteile, auf eine geeignete Trageinrichtung gesteckt und mit dieser zur Zuführeinrichtung (7) transportiert werden, wo der Bauteilstapel (5) von der angedockten Trageinrichtung auf den Träger (8) überschoben wird. Die Trageinrichtung kann anschließend zur Neubeladung zurückkehren.

Zur Unterstützung der gleitenden Bauteilbewegung am Träger (8) kann eine Rüttelvorrichtung (nicht dargestellt) vorhanden sein. Diese kann den Greifeinrichtungen (18,18',19,19') oder anderen Teilen der Stützeinrichtung (9,9') zugeordnet sein. Wie Figur 20 verdeutlicht, kann am beschickungsseitigen Trägerende (11) eine Bauteilsicherung (92) angeordnet sein, die an die vorgesehenen und zugelassenen Bauteile (4) adaptiert ist und nur diese Bauteile (4) durchlässt. Die Bauteilsicherung (92) kann z.B. eine entsprechend der Durchgangsöffnung (6) konturierte Scheibe sein, die nur mit dieser Durchlassöffnung (6) passiert werden kann.

Ferner ist es möglich, die Lage und/oder die Neigung des Trägers (8) zu verstellen. Hierfür können z.B. die Greifeinrichtungen (18,18',19,19') entsprechend konstruktiv angepasst sein.

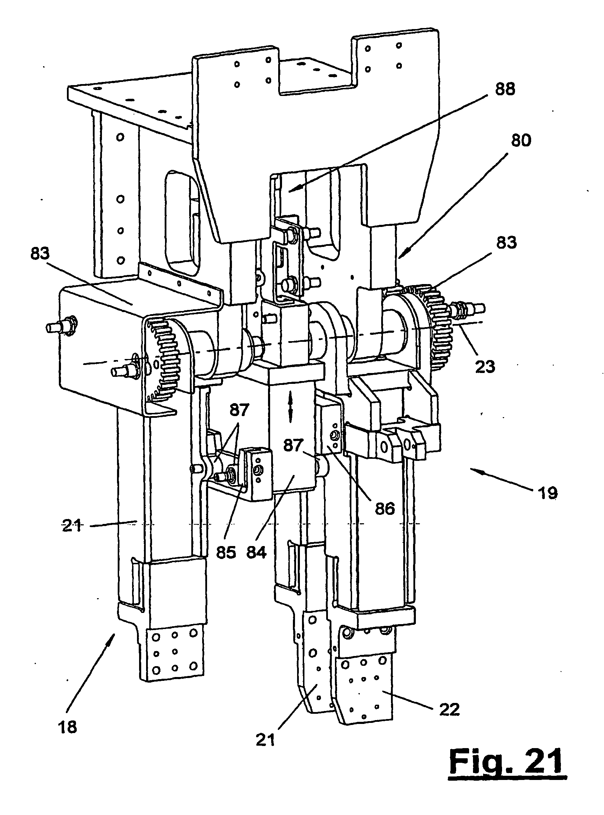

Die Zuführeinrichtung (7) kann verschiedene Sicherheitsvorrichtungen für die Greifeinrichtungen (18,19) aufweisen. Wie Figur 21 und 22 verdeutlichen, ist erfindungsgemäß eine formschlüssige Armverriegelung (80) für die schwenkbaren Haltearme (21,22) der paarweise benachbarten Greifeinrichtungen (18,19) und (18',19') vorhanden. Die Armverriegelung (80) sorgt dafür, dass die Greifeinrichtungen (18,19) und (18',19') nur abwechselnd, aber nicht gleichzeitig geöffnet werden können. Sie besteht z.B. aus einem zwischen den Greifeinrichtungen (18,19), (18',19') angeordneten und mittels eines Antriebs (88) vertikal beweglichen Schieber (84), der beidseits eine Kulisse (85,86) trägt, welche mit Rollen (87) an den benachbarten Seiten der Haltearme (21,22) zusammenwirkt. Die Kulissen (85,86) sind klammerartig ausgebildet und umgreifen im Spannschluss bei der Schieberbewegung die zugeordneten Rollen (87), so dass die Haltearme (21,22) nicht mehr gespreizt werden können.

Wie Figur 21 verdeutlicht, sind die beiden Kulissen (85,86) in unterschiedlichen Höhenlagen angeordnet und sind gegeneinander gerichtet. Wenn z.B. gemäß Figur 21 die linke Kulisse (85) die Rollen (87) der oberen Greifeinrichtung (18) einspannt, gibt in dieser Schieberposition die andere Kulisse (86) die Rollen (87) und die Haltearme (21,22) der unteren Greifeinrichtung (19) frei, so dass diese geöffnet werden kann. Nach Schließen der unteren Greifeinrichtung (19) wird zunächst der Antrieb (88) betätigt und der Schieber (84) abgesenkt, so dass die rechte Kulisse (86) die untere Greifeinrichtung (19) sperrt und zugleich die linke Kulisse (85) außer Eingriff bringt und ein Öffnen der oberen Greifeinrichtung (18) durch eine anschließende Antriebsbewegung ermöglicht.

In Figur 19 und 20 sind Ausgestaltungsmöglichkeiten für die Antriebstechnik der Haltearme (21,22) dargestellt. Die Armantriebe (81,82) für die obere und untere Greifeinrichtung (18,19) können gleichartig ausgebildet sein und z.B. aus pneumatischen oder hydraulischen Zylindern bestehen, welche jeweils gelenkig am einen Haltearm (22) des Armpaars angreifen und diesen um seine Schwenkachsen (23) drehen. Die Antriebsbewegung kann mittels eines Getriebes (83) auf den anderen Haltearm (21) übertragen werden, so dass dieser gegensinnig um seine Schwenkachse (23) schwenkt. Durch eine entsprechende Getriebeauslegung können die Schwenkkinematiken beider Haltearme (21,22) nach Bedarf gleich oder unterschiedlich gemacht werden. Beispielsweise können die Schwenkarme (21,22) unterschiedlich große Schwenkwinkel bzw. Schwenkweiten haben. Andererseits müssen die Schwenklager (23) auch nicht wie in den gezeigten Ausführungsbeispielen auf gleicher Höhe liegen, wobei auch die Haltearme (21,22) unterschiedliche Längen aufweisen können. Unterschiedliche Ausgestaltungen können z.B. bei Störkonturen angeraten sein.

Ferner kann zur Erhöhung der Unfallsicherheit eine Schiebersicherung (89) vorhanden sein, die eine Bewegung des Schiebers (84) nur dann ermöglicht, wenn die Haltearme (21,22) beider Greifeinrichtungen (18,19), (18',19') geschlossen sind. Zu diesem Zweck sind gemäß Figur 22 am Kopf des Schiebers (84) seitlich abstehende Bolzen (90) vorhanden, die mit halbrunden Sperrkurven (91) an den vier Haltearmen (21,22) zusammenwirken. In Schließstellung stehen die Sperrkurven (91) mit ihren plan abgeschnittenen Seiten senkrecht und bieten eine Durchgangspassage für die Bolzen (90), so dass der Schieber (84) durch den Antrieb (88) gehoben oder gesenkt werden kann. Die zentrisch zu den Schwenklagern (23) ausgerichteten Sperrkurven (91) drehen mit ihrem gewölbten Kurventeil sperrend in die Bewegungsbahn der Bolzen (90), wenn sich ein Haltearm (21,22) aus der Ausgangsstellung bzw. Greifstellung des Trägers (8) schwenkend herausbewegt. In diesem Fall kann der Schieber (84) nicht bewegt werden und infolgedessen auch die formschlüssige Armverriegelung (80) an den Haltearmen der anderen Greifeinrichtung nicht geöffnet werden. Hierdurch wird sichergestellt, dass immer mindestens eine Greifeinrichtung (18,19) geschlossen ist und den Träger (8) festhält.

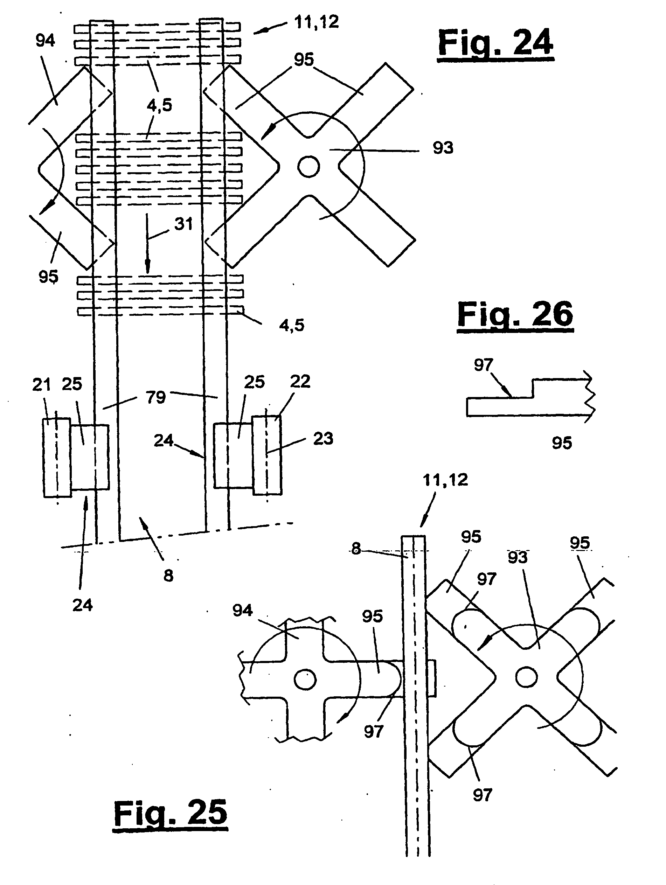

Figur 24 bis 26 zeigen eine Möglichkeit für die zusätzliche Abstützung von ein oder beiden Trägerenden (11,12). Hierfür sind am Trägerende (11,12) ein oder mehrere, z.B. zwei, drehbar gelagerte Tragsterne (93,94) mit mehreren, z.B. vier kreuzweise angeordneten Tragarmen (95) vorhanden. Der oder die Tragstern(e) (93,94) können von einem Werker bei der Bauteilübergabe manuell betätigt und gedreht werden. Sie können alternativ einen motorischen Antrieb aufweisen, der manuell vom Werker oder automatisch von einer eigenen Steuerung oder von der Steuerung der Zuführeinrichtung (7) betätigt wird.

Der Träger (8) liegt während aller Drehstellungen des oder der Tragsterne (93,94) stets auf mindestens einem Tragarm (95) auf und ist gegen Herunterfallen gesichert. Die Länge und Breite der Tragarme (95) und der seitliche Abstand der Drehachse der Tragsterne (93,94) vom Träger (8) ist hierauf entsprechend abgestimmt. In der einfachsten Ausführungsform genügt ein einzelner Tragstern (93,94). In der Variante von Figur 25 wirken zwei einander an einem einteiligen Träger (8) gegenüberliegende Tragsterne (93,94) gemeinsam, wobei ihre Drehstellungen so gewählt sind, dass sie mit ihren Tragarmen (95) in der Art einer Verzahnung jeweils in die gegenüberliegende Tragarmlücke des anderen Tragsterns (93,94) greifen. Mit dieser Gestalt ist während der Tragsterndrehung auch eine Bauteilförderung möglich, die ähnlich wie bei einem Zahnradförderer stattfinden kann. In den jeweiligen Freiraum benachbarter Tragarme (95) passen jeweils ein oder mehrere Bauteile (4).

Figur 24 zeigt eine Variante, in der der Träger mehrteilig ausgebildet ist und z.B. aus zwei parallelen Einzelstangen (79) besteht, an denen die Bauteile (4) mit Ihren Durchlassöffnungen hängend geführt sind. In diesem Fall werden die Einzelstangen (79) von jeweils einem außenseitig angeordneten Tragstern (93,94) gestützt. Die Tragsterne (93,94) sind mit ihren gegensinnigen Drehbewegungen derart aufeinander abgestimmt und synchronisiert, dass die Bauteile (4) einzeln oder in Gruppen während der Sternbewegung transportiert und weiter befördert werden können. Die Armausrichtung und die Drehstellung der beiden Tragsterne (93,94) kann in diesem Fall gleich sein.

Die Tragarme (95) können an ihrem vorderen freien Ende eine Einweiskurve oder Zentrierkurve (97) haben, die gegenüber dem vorderen Armende zurückversetzt angeordnet ist. Das Armende erhält hierfür die in Figur 26 in der Seitenansicht dargestellte Stufenform. Die Einweiskurve (97) kann führend auf die Bauteile (4) einwirken. Sie kann außerdem eventuellen seitlichen Verlagerungen des Trägers (8) entgegenwirken und dessen Ausrichtung stabilisieren. Der Träger (8) liegt dann auf dem vorderen Stufenabschnitt der Tragarme (95) auf.

Figur 24 verdeutlicht andererseits auch die bei einer solchen Stangenanordnung vorgesehene Greifkinematik. In diesem Fall können die Haltearme (21,22) seitlich voneinander beabstandet sein und mit jeweils einer Greifschale (25) ausgerüstet sein, die z.B. von außen in der Greifstellung gegen die benachbarte Einzelstange (79) gedrückt wird. In Schließstellung spannen die Haltearme (21,22) mit ihren Schalen (25) die z.B. über ein Distanzstück (nicht dargestellt) distanzierten Einzelstangen (79) zangenartig ein. Bei einer solchen Ausführungsform empfiehlt sich eine Schalengestaltung wie in Figur 23 mit oberen und unteren Stützfingern (76), die über die Stangenmitte vorspringen und auch bei nicht ganz geschlossener und angepresster Schale (25) für einen sicheren Halt der Einzelstange (79) sorgen.

Abwandlungen der gezeigten Ausführungsformen sind in verschiedener Weise möglich. Einerseits können die Greifeinrichtungen (18,18',19,19') eine beliebige andere konstruktive Ausgestaltung, Anordnung und abwechselnde Greiffunktion haben. Auch das Durchschleusen der Bauteile (4,4',5,5') mit dem abwechselnden Öffnen und Schließen sowie der zwischenzeitlichen Bauteilpassage kann in anderer Weise ausgeführt werden. Durch eine Mehrfachanordnung von Greifergruppen können schwer beladene Träger (8) an örtlich getrennten Stellen gehalten und besser abgestützt werden. In diesem Fall können die Öffnungs- und Schließvorgänge gruppenweise parallel ablaufen. Hierbei können auch an jeder Gruppe eine Vereinzelung und ein Transport des einzelnen Bauteils stattfinden. Bei Mehrfachanordnungen von Greifergruppen können sich mehrere Bauteilstapel bilden.

### BEZUGSZEICHENLISTE

- 1: Bearbeitungsstation
- 2: Schutzzaun
- 3: Zaunöffnung, Durchlass
- 4, 4': Bauteil
- 5, 5': Bauteil, Bauteilstapel
- 6: Durchgangsöffnung, Durchlass
- 7: Zuführeinrichtung
- 8: Träger
- 9, 9': Stützeinrichtung
- 10, 10': Vereinzelungsvorrichtung
- 11: Trägerende, Beschickungsseite
- 12: Trägerende, Abgabeseite
- 13, 13': Bauteilführung
- 14: Gegenhalter
- 15, 15': Anschlag
- 16: Auslauf
- 17: Grundgestell
- 18, 18': Greifeinrichtung obere
- 19, 19': Greifeinrichtung untere
- 20: Basisteil
- 21: Haltearm
- 22: Haltearm
- 23: Schwenklager
- 24, 24': Greifelement
- 25: Schale
- 26: Aufnahme
- 27: Trennfinger
- 28: Stelleinrichtung
- 29: Zahnrad
- 30: Zahnrad
- 31: Trägerrichtung, Förderrichtung
- 32: Beschickungsseite
- 33: Abgabeseite
- 34: Bauteilablage
- 35: Arbeitsbereich
- 36, 36': Schraubspindel
- 37: Spannbacke
- 38: Zapfen
- 39: Öffnung
- 40: Stützschale
- 41: Zustellung
- 73: Rundteil
- 74: Stützleiste
- 75: Ausnehmung
- 76: Stützfinger
- 77: Ausnehmung
- 78: Ausleger, Arm
- 79: Einzelstange
- 80: formschlüssige Armverriegelung
- 81: Armantrieb, Zylinder
- 82: Armantrieb, Zylinder
- 83: Getriebe
- 84: Schieber
- 85: Kulisse obere Haltearme
- 86: Kulisse untere Haltearme
- 87: Rolle
- 88: Antrieb
- 89: Schiebersicherung
- 90: Bolzen
- 91: Sperrkurve
- 92: Bauteilsicherung
- 93: Tragstern
- 94: Tragstern
- 95: Tragarm
- 96: Schutzhülle
- 97: Einweiskurve

## Patentansprüche

1. Zuführeinrichtung für mechanische Bauteile (4,5), insbesondere Karosseriebauteile oder andere Fahrzeugteile, mit vorzugsweise umfangseitig geschlossenen Durchgangsöffnungen (6), wobei die Zuführeinrichtung (7) mindestens einen Träger (8) aufweist, auf den die Bauteile (4,5) mittels der Durchgangsöffnungen (6) aufsteckbar sind, wobei die Zuführeinrichtung (7) eine Vereinzelungsvorrichtung (10) für die am Träger (8) befindlichen Bauteile (4,4',5,5') und mindestens eine Stützeinrichtung (9) mit mehreren gegenseitig beabstandeten und einzeln beweglichen sowie steuerbaren Greifeinrichtungen (18,18',19,19') zum abwechselnden Halten und Freigeben des Trägers (8) aufweist, wobei die Greifeinrichtungen (18,18',19,19') zangenartig ausgebildet sind und jeweils zwei bewegliche Haltearme (21,22) mit endseitigen, als Greifschalen (25) ausgebildeten Greifelementen (24,24') aufweisen, die den Träger (8) in Schließstellung festhalten und in Lösestellung für eine Bauteilpassage freigeben, **dadurch gekennzeichnet, dass** die Greifeinrichtungen (18,18',19,19') eine formschlüssige Armverriegelung (80) für die Haltearme (21,22) zur Sicherung einer Schließ- und Öffnungsreihenfolge der Greifeinrichtungen (18,18',19,19') aufweisen, wobei die Armverriegelung (80) dafür sorgt, dass die Greifainrichtungen (18,19) und (18',19') nur abwechselnd, aber nicht gleichzeitig geöffnet werden können.

2. Zuführeinrichtung nach Anspruch 1, **dadurch gekennzeichnet, dass** am Träger (8) das eine Trägerende (11) zur Beschickungsseite (32) und das andere Trägerende (12) zur Abgabeseite (33) weist.

3. Zuführeinrichtung nach Anspruch 1 oder 2, **dadurch gekennzeichnet, dass** die Stützeinrichtung (9,9') zwei Greifeinrichtungen (18,18',19,19') aufweist, die in Trägerrichtung (31) einen Abstand aufweisen, der mindestens dem Platzbedarf von einem Bauteil (4,5) entspricht.

4. Zuführeinrichtung nach Anspruch 1, 2 oder 3, **dadurch gekennzeichnet, dass** die Greifeinrichtungen (18,19) den Träger (8) fliegend halten, wobei die Trägerenden (11,12) frei liegen.

5. Zuführeinrichtung nach einem der vorhergehenden Ansprüche, **dadurch gekennzeichnet, dass** die zwei Greifschalen (25) miteinander den Träger (8) beidseits formschlüssig fassen, so dass der Träger (8) dreh- und schubfest gehalten ist.

6. Zuführeinrichtung nach einem der vorhergehenden Ansprüche, **dadurch gekennzeichnet, dass** die Greifeinrichtungen (18,18',19,19') den Träger (8) schräg halten, wobei das beschickungseitige Trägerende (11) höher als das abgabeseitigen Trägerende (12) liegt.

7. Zuführeinrichtung nach einem der vorhergehenden Ansprüche, **dadurch gekennzeichnet, dass** die Greifeinrichtungen (18,18',19,19') hängend an einem Grundgestell (17) angeordnet sind.

8. Zuführeinrichtung nach einem der vorhergehenden Ansprüche, **dadurch gekennzeichnet, dass** die Greifeinrichtungen (18,18',19,19') in unterschiedlicher Höhe am Grundgestell (17) angeordnet sind.

9. Zuführeinrichtung nach einem der vorhergehenden Ansprüche, **dadurch gekennzeichnet, dass** die Greifschalen (25) schräge Aufnahmen (26) zum formschlüssigen Greifen des Trägers (8) aufweisen.

10. Zuführeinrichtung nach einem der vorhergehenden Ansprüche, **dadurch gekennzeichnet, dass** die Greifeinrichtungen (18,18',19,19') jeweils ein Basisteil (20) aufweisen, an dem die Haltearme (21,22) endseitig nebeneinander schwenkbar gelagert und steuerbar angetrieben sind.

11. Zuführeinrichtung nach einem der vorhergehenden Ansprüche, **dadurch gekennzeichnet, dass** die formschlüssige Armverriegelung (80) einen angetriebenen Schieber (84) mit Kulissen (85,86) aufweist, die abwechselnd mit Rollen (87) an den Greifeinrichtungen (18,18',19,19') in formschlüssig sichernden Eingriff treten.

12. Zuführeinrichtung nach Anspruch 11, **dadurch gekennzeichnet, dass** die formschlüssige Armverriegelung (80) eine Schiebersicherung (89) aufweist, die eine Schieberbewegung nur bei geschlossenen Greifeinrichtungen (18,18',19,19') erlaubt.

13. Zuführeinrichtung nach einem der vorhergehenden Ansprüche, **dadurch gekennzeichnet, dass** die Vereinzelungsvorrichtung (10,10') mindestens einen beweglichen Trennfinger (27) mit einer Stelleinrichtung (28) für den Rückhalt und die gesteuerte Freigabe einzelner Bauteile (4,4',5,5') aufweist.

14. Zuführeinrichtung nach einem der vorhergehenden Ansprüche, **dadurch gekennzeichnet, dass** die Vereinzelungsvorrichtung (10,10') instationär angeordnet und mit der unteren Greifeinrichtung (19,19') verbunden ist.

15. Zuführeinrichtung nach Anspruch 14, **dadurch gekennzeichnet, dass** die Vereinzelungsvorrichtung (10,10') mindestens einen über einen Ausleger (78) mit der unteren Greifeinrichtung (19,19') verbundenen Trennfinger (27) und einen Anschlag an der oberen Greifeinrichtung (18,18') aufweist.

16. Zuführeinrichtung nach einem der vorhergehenden Ansprüche, **dadurch gekennzeichnet, dass** die Zuführeinrichtung (7) mindestens eine zusätzliche Bauteilführung (13,13') aufweist.

17. Zuführeinrichtung nach einem der vorhergehenden Ansprüche, **dadurch gekennzeichnet, dass** die Bauteilführung (13,13') mindestens einen an der Abgabeseite (33) angeordneten Anschlag (15,15') aufweist.

18. Zuführeinrichtung nach einem der vorhergehenden Ansprüche, **dadurch gekennzeichnet, dass** der Anschlag (15,15') steuerbar beweglich ist.

19. Zuführeinrichtung nach einem der vorhergehenden Ansprüche, **dadurch gekennzeichnet, dass** der Träger **(8)** ein oder mehrere Tragstangen aufweist, die zumindest bereichsweise eine gerade Ausrichtung haben.

20. Zuführeinrichtung nach einem der vorhergehenden Ansprüche, **dadurch gekennzeichnet, dass** der Träger (8) an der Abgabeseite (33) einen abgewinkelten oder gebogenen Auslauf (16) aufweist.

21. Zuführeinrichtung nach einem der vorhergehenden Ansprüche, **dadurch gekennzeichnet, dass** der Träger (8) an der Beschickungsseite (32) eine an die Kontur der Durchgangsöffnung (6) angepasste Bauteilsicherung (92) aufweist.

22. Zuführeinrichtung nach einem der vorhergehenden Ansprüche, **dadurch gekennzeichnet, dass** der Träger (8) abnehmbar und austauschbar an der Zuführeinrichtung (7) angeordnet ist.

23. Bearbeitungsstation für Bauteile (4,5), insbesondere Karosseriebauteile oder andere Fahrzeugteile, mit einem den Arbeitsbereich (35) umgebenden Schutzzaun (2), **dadurch gekennzeichnet, dass** die Bearbeitungsstation (1) ein oder mehrere Zuführeinrichtungen (7) nach einem der Ansprüche 1 bis 22 aufweist.

24. Bearbeitungsstation nach Anspruch 23, **dadurch gekennzeichnet, dass** die Zuführeinrichtung (7) an einem Schutzzaun (2) angeordnet ist, wobei die Stützeinrichtung (9,9') und die Greifeinrichtungen (18,18',19,19') an der Innenseite vom Schutzzaun (2) angeordnet sind und der Träger (8) durch eine an die Bauteile (4,4',5,5') angepasste Zaunöffnung (3) nach außen ragt.

25. Bearbeitungsstation nach Anspruch 24, **dadurch gekennzeichnet, dass** an der Zaunöffnung (3) eine nach außen ragende Schutzhülle (96) angeordnet ist.

26. Bearbeitungsstation nach einem der Ansprüche 23 bis 25, **dadurch gekennzeichnet, dass** die Beschickungsseite (32) außerhalb und die Abgabeseite (33) innerhalb des Schutzzauns (2) liegt.

27. Verfahren zum Zuführen mechanischer Bauteile (4,4',5,5'), insbesondere Karosseriebauteile oder andere Fahrzeugteile, mit vorzugsweise umfangseitig geschlossenen Durchgangsöffnungen (6), durch einen Schutzzaun (2) mit einer Zaunöffnung (3), **dadurch gekennzeichnet, dass** die Bauteile (4,4',5,5') mittels einer Zuführeinrichtung (7) nach einem der Ansprüche 1 bis 22 zugeführt werden, wobei die Bauteile (4,4',5,5') außerhalb des Schutzzauns (2) mittels der Durchgangsöffnungen (6) im Stapel auf den Träger (8) oder mit dem Träger (8) der in der Zaunöffnung (3) befindlichen Zuführeinrichtung (7) aufgegeben werden, wobei die Bauteile (4,4',5,5') von der Zuführeinrichtung (7) entlang des schrägen Trägers (8) durch ihr Eigengewicht schräg nach unten rutschen und durch den Schufzzaun (2) transportiert und dabei vereinzelt werden.

28. Verfahren nach Anspruch 27, **dadurch gekennzeichnet, dass** während das Bauteiltransports und der Vereinzelung der Bauteile (4,4',5,5') der Träger (8) mit mehreren gegenseitig beabstandeten und einzeln beweglichen Greifeinrichtungen (18,18',19,19') abwechselnd gehalten und freigegeben wird.

## Claims

1. Feed device for mechanical components (4, 5), in particular bodyshell components or other vehicle parts, having preferably circumferentially closed passage openings (6), wherein the feed device (7) has at least one carrier (8) onto which the components (4, 5) can be mounted by means of the passage openings (6), wherein the feed device (7) has a separating device (10) for the components (4, 4', 5, 5') situated on the carrier (8) and has at least one support device (9) with a plurality of individually movable and controllable gripping devices (18, 18', 19, 19'), which are spaced apart from one another, for alternately holding and releasing the carrier (8), wherein the gripping devices (18, 18', 19, 19') are formed in the manner of tongs and have in each case two movable holding arms (21, 22) with gripping elements (24, 24') on the ends, which gripping elements are in the form of gripping shells (25) and, when in the closed position, hold the carrier (8) fixed, and when in the release position, release the carrier for the passage of a component, **characterized in that** the gripping devices (18, 18', 19, 19') have a positively locking arm interlocking means (80) for the holding arms (21, 22) for ensuring a closing and opening sequence of the gripping devices (18, 18', 19, 19'), wherein the arm interlocking means (80) ensures that the gripping devices (18, 19) and (18', 19') can be opened only alternately but not simultaneously.

2. Feed device according to Claim 1, **characterized in that**, on the carrier (8), one carrier end (11) points toward the loading side (32) and the other carrier end (12) points toward the delivery side (33).

3. Feed device according to Claim 1 or 2, **characterized in that** the support device (9, 9') has two gripping devices (18, 18', 19, 19') which, in the carrier direction (31), have a spacing which corresponds at least to the spatial requirement of one component (4, 5).

4. Feed device according to Claim 1, 2 or 3, **characterized in that** the gripping devices (18, 19) hold the carrier (8) in on overhung configuration, wherein the carrier ends (11, 12) lie free.

5. Feed device according to one of the preceding claims, **characterized in that** the two gripping shells (25) together enclose the carrier (8) on both sides in a positively locking manner, such that the carrier (8) is held so as to be prevented from rotating and sliding.

6. Feed device according to one of the preceding claims, **characterized in that** the gripping devices (18, 18', 19, 19') hold the carrier (8) obliquely, wherein the loading-side carrier end (11) is situated higher than the delivery-side carrier end (12).

7. Feed device according to one of the preceding claims, **characterized in that** the gripping devices (18, 18', 19, 19') are arranged in a suspended manner on a base frame (17).

8. Feed device according to one of the preceding claims, **characterized in that** the gripping devices (18, 18', 19, 19') are arranged on the base frame (17) at different heights.

9. Feed device according to one of the preceding claims, **characterized in that** the gripping shells (25) have oblique receptacles (26) for gripping the carrier (8) in a positively locking manner.

10. Feed device according to one of the preceding claims, **characterized in that** the gripping devices (18, 18', 19, 19') have in each case one base part (20) on which the holding arms (21, 22) are pivotably mounted, at the end thereof, adjacent to one another and so as to be driven in a controllable fashion.

11. Feed device according to one of the preceding claims, **characterized in that** the positively locking arm interlocking means (80) has a driven slide (84) with slotted guides (85, 86) which enter alternately into positively locking, securing engagement with rollers (87) on the gripping devices (18, 18', 19, 19').

12. Feed device according to Claim 11, **characterized in that** the positively locking arm interlocking means (80) has a slide securing means (89) which permits a slide movement only when the gripping devices (18, 18', 19, 19') are closed.

13. Feed device according to one of the preceding claims, **characterized in that** the separating device (10, 10') has at least one movable dividing finger (27) with an actuating device (28) for the retention and the controlled release of individual components (4, 4', 5, 5').

14. Feed device according to one of the preceding claims, **characterized in that** the separating device (10, 10') is arranged so as to be non-stationary and is connected to the lower gripping device (19, 19').

15. Feed device according to Claim 14, **characterized in that** the separating device (10, 10') has at least one dividing finger (27), which is connected to the lower gripping device (19, 19') via a bracket (78), and a stop on the upper gripping device (18, 18').

16. Feed device according to one of the preceding claims, **characterized in that** the feed device (7) has at least one additional component guide (13, 13').

17. Feed device according to one of the preceding claims, **characterized in that** the component guide (13, 13') has at least one stop (15, 15') arranged on the delivery side (33).

18. Feed device according to one of the preceding claims, **characterized in that** the stop (15, 15') is movable in a controllable fashion.

19. Feed device according to one of the preceding claims, **characterized in that** the carrier (8) has one or more carrying rods which have a straight alignment at least in regions.

20. Feed device according to one of the preceding claims, **characterized in that** the carrier (8) has, on the delivery side (33) an angled or curved run-out portion (16).

21. Feed device according to one of the preceding claims, **characterized in that** the carrier (8) has, on the loading side (32), a component securing means (92) which is adapted to the contour of the passage opening (6).

22. Feed device according to one of the preceding claims, **characterized in that** the carrier (8) is arranged in a removable and exchangeable manner on the feed device (7).

23. Machining station for components (4, 5), in particular bodyshell components or other vehicle parts, having a protective fence (2) which surrounds the working area (35), **characterized in that** the machining station (1) has one or more feed devices (7) according to one of Claims 1 to 22.

24. Machining station according to Claim 23, **characterized in that** the feed device (7) is arranged at a protective fence (2), wherein the support device (9, 9') and the gripping devices (18, 18', 19, 19') are arranged on the inside of the protective fence (2) and the carrier (8) projects outwards through a fence opening (3) adapted to the components (4, 4', 5, 5').

25. Machining station according to Claim 24, **characterized in that** an outwardly projecting protective cladding (96) is arranged on the fence opening (3).

26. Machining station according to one of Claims 23 to 25, **characterized in that** the loading side (32) is situated outside the protective fence (2) and the delivery side (33) is situated within the protective fence (2).

27. Method for feeding mechanical components (4, 4', 5, 5'), in particular bodyshell components or other vehicle parts, having preferably circumferentially closed passage openings (6), through a protective fence (2) with a fence opening (3), **characterized in that** the components (4, 4', 5, 5') are fed by means of a feed device (7) according to one of Claims 1 to 22, wherein the components (4, 4', 5, 5') outside the protective fence (2) are, by means of the passage openings (6) in the stack, placed onto the carrier (8) or supplied by means of the carrier (8) to the feed device (7) situated in the fence opening (3), wherein, by the feed device (7), the components (4, 4', 5, 5') slide obliquely downwards along the oblique carrier (8) under their own weight and are transported through the protective fence (2) and, in the process, are separated.

28. Method according to Claim 27, **characterized in that**, during the component transport and the separation of the components (4, 4', 5, 5'), the carrier (8) is alternately held and released by means of a plurality of individually movable gripping devices (18, 18', 19, 19') which are spaced apart from one another.

## Revendications

1. Dispositif d'amenée pour des composants mécaniques (4, 5), en particulier des composants de carrosserie ou d'autres pièces de véhicule, comprenant des ouvertures de passage (6) de préférence fermées du côté périphérique, le dispositif d'amenée (7) présentant au moins un support (8) sur lequel les composants (4, 5) peuvent être enfichés au moyen des ouvertures de passage (6), le dispositif d'amenée (7) présentant un dispositif de séparation (10) pour les composants (4, 4', 5, 5') se trouvant sur le support (8) et au moins un dispositif de support (9) avec plusieurs dispositifs de préhension (18, 18', 19, 19') espacés les uns des autres et déplaçables et commandables individuellement pour retenir et libérer en alternance le support (8), les dispositifs de préhension (18, 18', 19, 19') étant réalisés sous forme de pinces et présentant à chaque fois deux bras de retenue mobiles (21, 22) avec des éléments de préhension (24, 24') aux extrémités, réalises sous forme de coques de préhension (25), qui fixent le support (8) dans la position de fermeture et qui le libèrent dans la position de libération pour permettre un passage de composant, **caractérisé en ce que** les dispositifs de préhension (18, 18', 19, 19') présentent un verrouillage des bras par engagement par correspondance géométrique (80) pour les bras de retenue (21, 22) pour fixer une séquence de fermeture et d'ouverture des dispositifs de préhension (18, 18', 19, 19'), le verrouillage des bras (80) faisant en sorte que les dispositifs de préhension (18, 19) et (18', 19') ne puissent être ouverts qu'en alternance et pas simultanément.

2. Dispositif d'amenée selon la revendication 1, **caractérisé en ce que** sur le support (8), une extrémité de support (11) est tournée vers le côté d'alimentation (32) et l'autre extrémité de support (12) est tournée vers le côté de sortie (33) .

3. Dispositif d'amenée selon la revendication 1 ou 2, **caractérisé en ce que** le dispositif de support (9, 9') présente deux dispositifs de préhension (18, 18', 19, 19') qui présentent dans la direction de support (31) un espacement qui correspond au moins à l'espace requis par un composant (4, 5).

4. Dispositif d'amenée selon la revendication 1, 2 ou 3, **caractérisé en ce que** les dispositifs de préhension (18, 19) retiennent le support (8) de manière flottante, les extrémités de support (11, 12) étant exposées.

5. Dispositif d'amenée selon l'une quelconque des revendications précédentes, **caractérisé en ce que** les deux coques de préhension (25) enserrent par engagement par correspondance géométrique des deux côtés le support (8) entre elles, de telle sorte que le support (8) soit retenu de manière fixée en rotation et en poussée.

6. Dispositif d'amenée selon l'une quelconque des revendications précédentes, **caractérisé en ce que** les dispositifs de préhension (18, 18', 19, 19') retiennent obliquement le support (8), l'extrémité de support (11) du côté de l'alimentation se situant plus haut que l'extrémité de support (12) du côté de la sortie.

7. Dispositif d'amenée selon l'une quelconque des revendications précédentes, **caractérisé en ce que** les dispositifs de préhension (18, 18', 19, 19') sont disposés de manière suspendue à un bâti de base (17).

8. Dispositif d'amenée selon l'une quelconque des revendications précédentes, **caractérisé en ce que** les dispositifs de préhension (18, 18', 19, 19') sont disposés à différente hauteur sur le bâti de base (17).

9. Dispositif d'amenée selon l'une quelconque des revendications précédentes, **caractérisé en ce que** les coques de préhension (25) présentent des logements obliques (26) pour saisir par engagement par correspondance géométrique le support (8).

10. Dispositif d'amenée selon l'une quelconque des revendications précédentes, **caractérisé en ce que** les dispositifs de préhension (18, 18', 19, 19') présentent chacun une partie de base (20), sur laquelle les bras de retenue (21, 22) sont supportés de manière pivotante l'un à côté de l'autre aux extrémités et sont entraînés de manière commandable.

11. Dispositif d'amenée selon l'une quelconque des revendications précédentes, **caractérisé en ce que** le verrouillage des bras par engagement par correspondance géométrique (80) présente un coulisseau entraîné (84) avec des coulisses (85, 86) qui en alternance s'engagent en assurant un engagement par correspondance géométrique avec des rouleaux (87), sur les dispositifs de préhension (18, 18', 19, 19').

12. Dispositif d'amenée selon la revendication 11, **caractérisé en ce que** le verrouillage des bras par engagement par correspondance géométrique (80) présente une fixation de coulisseau (89) qui ne permet un mouvement du coulisseau que lorsque les dispositifs de préhension (18, 18', 19, 19') sont fermés.

13. Dispositif d'amenée selon l'une quelconque des revendications précédentes, **caractérisé en ce que** le dispositif de séparation (10, 10') présente au moins un doigt de séparation mobile (27) avec un dispositif de commande (28) pour retenir et libérer de manière commandée des composants individuels (4, 4', 5, 5').

14. Dispositif d'amenée selon l'une quelconque des revendications précédentes, **caractérisé en ce que** le dispositif de séparation (10, 10') est disposé de manière non stationnaire et est connecté au dispositif de préhension inférieur (19, 19').

15. Dispositif d'amenée selon la revendication 14, **caractérisé en ce que** le dispositif de séparation (10, 10') présente au moins un doigt de séparation (27) connecté par le biais d'un bras en porte-à-faux (78) au dispositif de préhension inférieur (19, 19') et une butée sur le dispositif de préhension supérieur (18, 18').

16. Dispositif d'amenée selon l'une quelconque des revendications précédentes, **caractérisé en ce que** le dispositif d'amenée (7) présente au moins un guide de composant supplémentaire (13, 13').

17. Dispositif d'amenée selon l'une quelconque des revendications précédentes, **caractérisé en ce que** le guide de composant (13, 13') présente au moins une butée (15, 15') disposée sur le côté de sortie (33) .

18. Dispositif d'amenée selon l'une quelconque des revendications précédentes, **caractérisé en ce que** la butée (15, 15') est déplaçable de manière commandable.

19. Dispositif d'amenée selon l'une quelconque des revendications précédentes, **caractérisé en ce que** le support (8) présente une ou plusieurs barres porteuses qui ont au moins en partie une orientation droite.

20. Dispositif d'amenée selon l'une quelconque des revendications précédentes, **caractérisé en ce que** le support (8) présente sur le côté de sortie (33) une sortie (16) coudée ou courbe.

21. Dispositif d'amenée selon l'une quelconque des revendications précédentes, **caractérisé en ce que** le support (8) présente sur le côté d'alimentation (32) une fixation de composant (92) adaptée au contour de l'ouverture de passage (6).

22. Dispositif d'amenée selon l'une quelconque des revendications précédentes, **caractérisé en ce que** le support (8) est disposé de manière à pouvoir être enlevé et remplacé sur le dispositif d'amenée (7).

23. Poste de traitement pour des composants (4, 5), notamment des composants de carrosserie ou d'autres pièces de véhicule, comprenant une barrière de protection (2) entourant la zone de travail (35), **caractérisé en ce que** le poste de traitement (1) présente un ou plusieurs dispositifs d'amenée (7) selon l'une quelconque des revendications 1 à 22.

24. Poste de traitement selon la revendication 23, **caractérisé en ce que** le dispositif d'amenée (7) est disposé sur une barrière de protection (2), le dispositif de support (9, 9') et les dispositifs de préhension (18, 18', 19, 19') étant disposés sur le côté intérieur de la barrière de protection (2) et le support (8) faisant saillie vers l'extérieur à travers une ouverture de la barrière (3) adaptée aux composants (4, 4', 5, 5').

25. Poste de traitement selon la revendication 24, **caractérisé en ce qu'**une enveloppe de protection (96) saillant vers l'extérieur est disposée sur l'ouverture de la barrière (3).

26. Poste de traitement selon l'une quelconque des revendications 23 à 25, **caractérisé en ce que** le côté d'alimentation (32) se situe en dehors de la barrière de protection (2) et le côté de sortie (33) à l'intérieur de celle-ci.

27. Procédé pour amener des composants mécaniques (4, 4', 5, 5'), en particulier des composants de carrosserie ou d'autres pièces de véhicule, comprenant des ouvertures de passage (6) de préférence fermées du côté périphérique, par une barrière de protection (2) avec une ouverture de barrière (3), **caractérisé en ce que** les composants (4, 4', 5, 5') sont acheminés au moyen d'un dispositif d'amenée (7) selon l'une quelconque des revendications 1 à 22, les composants (4, 4', 5, 5') étant chargés à l'extérieur de la barrière de protection (2) au moyen des ouvertures de passage (6) en pile sur le support (8) ou avec le support (8) du dispositif d'amenée (7) se trouvant dans l'ouverture de la barrière (3), les composants (4, 4', 5, 5') glissant obliquement vers le bas sous l'effet de leur propre poids depuis le dispositif d'amenée (7) le long du support oblique (8) et étant transportés à travers la barrière de protection (2) et étant ainsi séparés.

28. Procédé selon la revendication 27, **caractérisé en ce que** pendant le transport des composants et la séparation des composants (4, 4', 5, 5'), le support (8) étant en alternance maintenu et libéré au moyen de plusieurs dispositifs de préhension (18, 18', 19, 19') espacés les uns des autres et déplaçables individuellement.
